# EUROPEAN PATENT SPECIFICATION

(11) **EP 1 343 988 B1**
(45) Date of publication and mention of the grant of the patent: **23.11.2005**
(21) Application number: 01994945.2
(22) Date of filing: 19.12.2001
(51) Int. Cl.: F16H 57/08

(54) **MULTISTAGE PLANETARY SPEED REDUCER**
MEHRSTUFIGES PLANETENUNTERSETZUNGSGETRIEBE
REDUCTEUR DE VITESSE PLANETAIRE A ETAGES MULTIPLES

(30) Priority: 22.12.2000 IT BO20000744
(43) Date of publication of application: 17.09.2003
(73) Proprietor: Castellani Giovanni, 40100 Modena (IT)
(72) Inventor: Castellani Giovanni, 40100 Modena (IT)
(74) Representative: di Francia, Vincenzo
(86) International application number: PCT/IT2001/000640
(87) International publication number: WO 2002/052176

(56) References cited:
- US-A- 4 380 274
- US-A- 4 590 820
- US-A- 6 080 199
- US-A- 6 099 432

## Description

### Technical field

This invention aims at a multistage planet speed reducer with spur gears.

### Background Art

Multistage planet speed reducers are currently available consisting of a first stage involving a first sun gear driven by the coaxial driving shaft, a first set of planet gears carried by a first carrier disc and meshing with the first sun gear and with a first fixed ring gear; and at least a second stage consisting of a second sun gear driven by the coaxial first carrier disc, a second set of planet gears carried by a second carrier and meshing with the second sun gear and with a second fixed ring gear.

Available, in particular, are multistage planet gear speed reducers with high torque, with spur gears, each of the toothed rings being rigidly fixed in their own casing or themselves constituting the casing. The diameter of the stages gradually increases from the initial to the final stage, just as the output torque of each stage.

These speed reducers are fairly economical to build but are very reliable, owing to their simple, robust structure. The said reducers are, however, very noisy, by virtue of their character of spur gears with low contact ratio, and owing to the fact that the planet gears have unstable centre distance and alignment, especially because of the floating carrier discs. For the latter have increased the compactness allowing small alignement errors of the axes, but they may be a source of noise for the fastest meshings of the reducer.

An example of prior art is disclosed by the US patent n° 6,099,432, on which the preamble of claim 1 is based, which relates to a planetary gear device comprising a rear-stage planetary gear mechanism having carrier parts constituting a divided-type carrier. In particular these carrier parts have axial holes suitable to fix the planetary shafts thereon and to be accessed directly from the side of an outer end surface of the output-side carrier part. So both carrier parts can be twisted by gripping, making use of the axial holes, in order to carry out blacklash adjustment from one side of the carrier parts.

This type of planetary gear device does not solve the problem of reducing noise effects where they are most effective, that is at the first stage of the planetary mechanism. Moreover the solution disclosed by this patent proves to be rather complex in conception and not so versatile in use.

### Disclosure of invention

The aim of the present invention is to solve this problem by devising a multistage planet gear reducer with spur gear meshing that will provide a reduction in noise.

In the context of this task, a further aim of the present invention is to provide a multistage planet gear reducer with spur gear meshing that shall be simple in conception, reliable in working and versatile in use.

The said aims are achieved, according to the present invention, by a multistage planet any speed reducer according to claim 1.

### Brief Description of Drawings

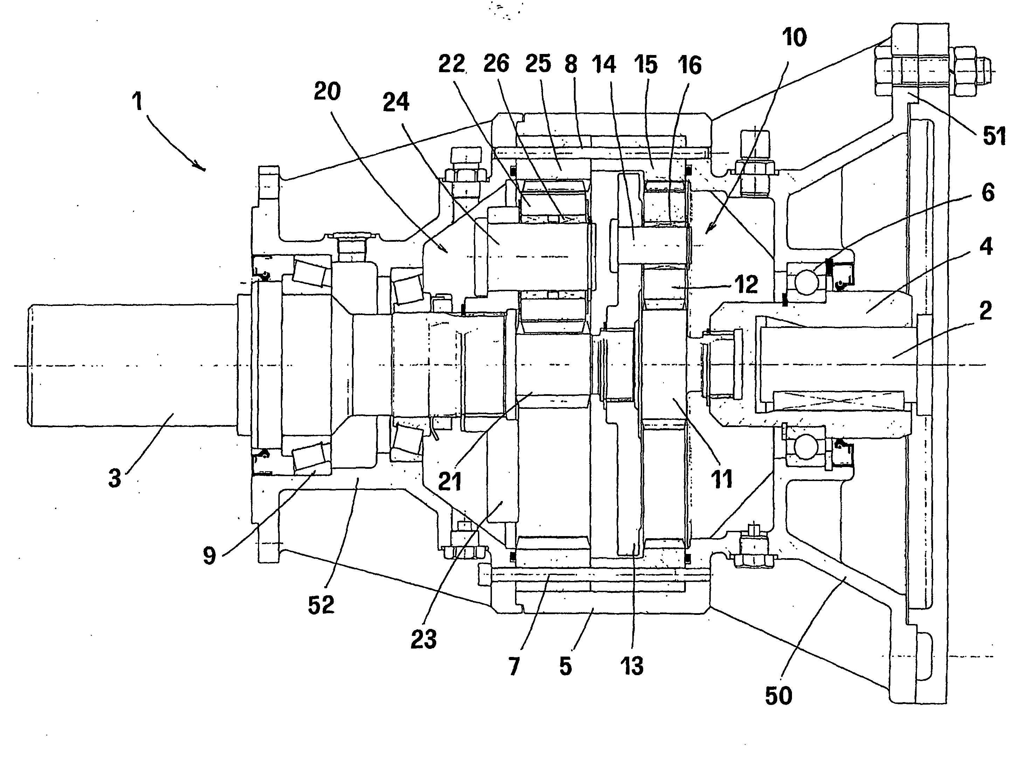

The details of the invention will be clearer from a detailed description of a form of design as preferred of the multistage planetary speed reducer with spur gears, illustrated by way of example in the enclosed drawing, in which:
the only figure shows a view in longitudinal section of the relevant planetary speed reducer.

### Modes for carrying out the Invention

With specific reference to said figure, the multistage planetary speed reducer with spur gears is indicated by 1 as a whole..

The unit 1 involves a first stage 10 consisting of a first sun gear 11 driven by the coaxial driving shaft 2, a first set of planet gears 12 carried by a first carrier disc 13, rotating by means of roller-bearings 16 on their own pins 14, and meshing with the first sun gear 11 and with a first fixed ring gear 15. The first stage 10 is accompanied by at least a second stage 20 consisting of a second sun gear 21 driven by the coaxial first carrier disc 13, a second set of planet gears 22 carried by a second carrier disc 23, said planets rotating by means of roller-bearings 26 on their own pins 24, and meshing with the second sun gear 21 and with a second fixed ring gear 25.

The pins 14, 24 are blocked in the relevant carrier discs 13, 23 by forcing, if need be with knurling.

The second carrier disc 23 drives the coaxial output shaft 3 of the unit. The torque transmission from the first carrier disc 13 to the second sun gear 21 and from the second carrier disc 23 to the output shaft 3 is effected, for example, by means of the respective splined shaft ends.

The first 15 and second 25 ring gears have preferably equal external diameters and are fixed in a single cylindrical casing 5; they are also centred with narrow tolerance with respect to the axis of the driving shaft 2. Mounting the ring gears 15, 25 in a single casing 5 facilitates centring of the one to the other and of both with respect to the axis of the driving shaft.

The cylindrical casing 5 can be directly flanged to the motor by a portion of the head 50 that extends from the cylindrical casing 5 and is in the form of the flange 51. Within the head 50 is a sleeve 4, rotating on ball-bearings, in which the driving shaft 2 is set. The ring gears 15, 25 are fixed, by screw devices 7, between a shoulder of the casing 5 and a counterposed head 52 and are also traversed by longitudinal pins 8. Inside the head 52 the output shaft 3 rotates on roller-bearings 9.

Obviously, the head 50 presenting the flange 51 can be connected, instead of directly to the motor, to any intermediate mechanism; or it can be absent and, instead of the sleeve 4, there may be an protruding input shaft, supported by appropriate rotating elements, for driving by any means, e.g. coupling, pulley, toothed wheel.

The first carrier disc 13 of the first stage 10 is appropriately centred by means of rolling coupling in the first ring gear 15. This rolling coupling is achieved preferably by interposing rolling elements, e.g. a radial rigid ball-bearing (not shown in the figure).

In accordance with the invention, at least the first stage 10 presents a contact ratio greater than 2 in the meshing both between sun gear and planet gears and between planet gears and ring gear. This contact ratio greater than 2 can be achieved with a high number of teeth, i.e. with small module; the said contact ratio can also be effected with a low pressure angle between the teeth and/or with a greater height of the said teeth.

This provides a considerable reduction in noise in the first stage, which, being the fastest, tends to be the noisiest. For the contact ratio greater than 2 enables alternation between two or three pairs of mating teeth, and the behaviour is not dissimilar to that of helical gears.

In view of the small module, and the resulting need to have fairly large diameters for resistance to breaking, the possibility is provided to make the external diameter of the ring 15 of the first stage 10 equal to that of the ring 25 of the second stage 20, by setting both rings 15, 25 in a single cylindrical casing 5. For purposes of centring and alignment, this casing 5 is also preferably flanged directly to the motor, so that the ring gear 15 of the first stage 10 will enable good centring of the planet gears by means of rolling coupling, with possible insertion of a radial rigid ball-bearing, which will also enhance the parallelism between the planet gears and the drive shaft.

In order to achieve the contact ratio greater than 2, the construction of the teeth of the first stage 10 requires special tools with higher than normal teeth and low pressure angle. It will therefore be as well to adopt a module such that the root diameter of the internal teeth of the first ring gear 15 be equal to that of the ring gear 25 of the second stage 20.

Obviously the unit can be equipped with further stages. These proceed by gradually increasing diameter, in the usual manner.

The multistage planetary speed reducer with spur gear meshing here described thus achieves the aim of noise reduction.

It should be noted that this result is obtained with a simple, functional structure that does not entail heavier costs as compared with traditional structures.

In an applicative variation, the reducer may have, in itself, two degrees of freedom, as the rotating rings are driven by external elements in such a way as to remove a degree of freedom.

In the actual working of the invention, the materials employed, as well as their shape and sizes, may be chosen according to requirements.

## Claims

1. Multistage planetary speed reducer of the type comprising at least one first stage (10) consisting of a first sun pinion (11) driven by the coaxial driving shaft (2), a first set of planet gears (12) supported by a first carrier disc (13) and meshing with said first sun pinion (11) and with a fixed ring gear (15), and a second stage (20) consisting of a second sun pinion (21) driven by the coaxial said first carrier disc (13), a second set of planet gears (22) carried by a second carrier disc (23) and meshing with the said second sun gear (21) and with a second ring gear (25), wherein the first ring (15) and second ring (25) have equal external diameters, **characterised by** the fact that at least said first stage (10) presents a contact ratio greater than 2; by the fact that the first ring (15) and the second ring (25) are set fixed in a single cylindrical casing (5), centred with narrow tolerance with respect to the axis of said driving shaft (2); in that the multistage planetary speed reducer has meshing spur gears with non helical teeth; and by the fact that said first carrier disc (13) of said first stage (10) is centred with rolling coupling.

2. Speed reducer as per claim 1, **characterized by** the fact that said first stage (10) has tooth module such that the root diameter of the internal teeth of said first ring (15) is equal to that of the ring gear (25) of said second stage (20).

3. Speed reducer as per claim 1, **characterized by** the fact that said first carrier disc (13) is centred in said first ring gear (15) of the first stage (10).

4. Speed reducer as per claim 1, **characterized by** the fact that the aforesaid rolling coupling is achieved by the interposition of rolling elements.

5. Speed reducer as per claim 4, **characterized by** the fact that the aforesaid rolling elements consist of a radial rigid ball-bearing.

6. Speed reducer as per claim 1, **characterized by** the fact that the aforesaid contact ratio greater than 2 of said first stage (10) is achieved with high number of teeth and small module.

7. Speed reducer as per claim 6, **characterized by** the fact that the aforesaid contact ratio greater than 2 of said first stage (10) is achieved with a low pressure angle between the teeth and/or a greater tooth height.

8. Speed reducer as per claim 1, **characterized by** the fact that said cylindrical casing (5) is flanged directly to the motor.

## Patentansprüche

1. Mehrstufiges Planetenuntersetzungsgetriebe von dem Typ mit wenigstens einer ersten Stufe (10), die aus einem ersten von der koaxialen Antriebswelle (2) getriebenen Sonnenrad (11), einem ersten von einer ersten Trägerscheibe (13) unterstützten Planetenrädersatz (12), der mit dem ersten Sonnenrad (11) und mit einem festen Ringsrad (15) eingreift, besteht, und mit einer zweiten Stufe (20), die aus einem zweiten von dem koaxialen ersten Trägerscheibe (13) getriebenen Sonnenrad (21), einem zweiten von einer zweiten Trägerscheibe (23) getragenen Planetenrädersatz (22), der mit dem zweiten Sonnenrad (21) und mit einem zweiten Ringsrad (25) eingreift, besteht, wobei das erste Ringsrad (15) und das zweite Ringsrad (25) gleiche Außendurchmesser haben, **dadurch gekennzeichnet, daß** die wenigstens erste Stufe (10) eine größere als 2 Überdeckung aufweist; daß das erste Ringsrad (15) und das zweite Ringsrad (25) in einem einzigen zylindrischen Gehäuse (5) befestigt und mit enger Toleranz zu der Achse der Antriebswelle (2) zentriert sind; daß das mehrstufige Planetenuntersetzungsgetriebe keine Schrägstirnräder sondern eingreifende Geradstirnräder hat; und daß die erste Trägerscheibe (13) der ersten Stufe (10) durch Rollenkupplung zentriert ist.

2. Untersetzungsgetriebe nach Anspruch 1, **dadurch gekennzeichnet, daß** die erste Stufe (10) ein solches Zhanmodul hat, daß das Fußkreisdurchmesser der Innenzähne des ersten Ringsrades (15) gleich dem des Ringsrades (25) der zweiten Stufe (20) ist.

3. Untersetzungsgetriebe nach Anspruch 1, **dadurch gekennzeichnet, daß** die erste Trägerscheibe (13) in dem ersten Ringsrad (15) der ersten Stufe (10) zentriert ist.

4. Untersetzungsgetriebe nach Anspruche 1,**dadurch gekennzeichnet, daß** die Rollenkupplung durch das Dazwischenlegen von rollenden Teile ausgeführt ist.

5. Untersetzungsgetriebe nach Anspruch 4, **dadurch gekennzeichnet, daß** die rollenden Teile aus einem Rillenkugellager bestehen.

6. Untersetzungsgetriebe nach Anspruch 1, **dadurch gekennzeichnet, daß** die größere als 2 Überdeckung der ersten Stufe (10) durch höhe Verzahnungsnummer und niedriges Modul ausgeführt wird.

7. Untersetzungsgetriebe nach Anspruch 6, **dadurch gekennzeichnet, daß** die größere als 2 Überdeckung der ersten Stufe (10) durch niedrigen Eingriffswinkel und/oder höhere Verzahnungshöhe ausgeführt wird.

8. Untersetzungsgetriebe nach Anspruch 1, **dadurch gekennzeichnet, daß** das zylindrische Gehäuse (5) unmittelbar an dem Motor geflanscht ist.

## Revendications

1. Réducteur de vitesse planétaire à étages multiples du Type comprénant au moins un premier étage (10) consistant en un premier pignon solaire (11) conduit par l'arbre moteur (2) coaxial, un premier train d'engrenages planétaires (12) supportés par un premier disque porte-satellites (13) et en prise avec le premier pignon solaire (11) et avec une couronne dentée (15) fixée, et un deuxième étage (20) consistant en un deuxième pignon solaire (21) conduit par le premier disque porte-satellites (13) coaxial, un deuxième train d'engrenages planétaires (22) supportés par un deuxième disque porte-satellites (23) et en prise avec le deuxième pignon solaire (21) et avec une deuxième couronne dentée (25), où la première couronne dentée (15) et la deuxième couronne dentée (25) ont diamètres extérieurs égaux, **caractérisé en ce que** au moins le premier étage (10) présente un rapport de conduite plus grand que 2; **en ce que** la première couronne dentée (15) et la deuxième couronne dentée (25) sont fixées à l'intérieur d'un seul carter (5), centrées avec tolérance étroite par rapport à l'axe de l'arbre moteur (2): **en ce que** le réducteur de vitesse planétaire à étages multiples a roues droites cylindriques en prise à dentures non hélicoïdales; et **en ce que** le premier disque porte-satellites (13) du premier étage (10) est centré au moyens d'un accouplement de roulement.

2. Réducteur de vitesse selon la revendication 1, **caractérisé en ce que** le premier étage (10) a un module de denture tel que le diamètre de pied de la denture intérieure de la première couronne dentée (15) est égal à celui de la couronne dentée (25) du deuxième étage (20).

3. Réducteur de vitesse selon la revendication 1, **caractérisé en ce que** le premier disque porte-satellites (13) est centré dans la première couronne dentée (15) du premier étage (10).

4. Réducteur de vitesse selon la revendication 1, **caractérisé en ce que** l'accouplement de roulement est réalisé au moyens de l'interposition d'éléments de roulement.

5. Réducteur de vitesse selon la revendication 4, **caractérisé en ce que** les éléments de roulement consistent en un roulement à billes de type rigide et radial.

6. Réducteur de vitesse selon la revendication 1, **caractérisé en ce que** le rapport de conduite plus grand que 2 du premier étage (10) est réalisé au moyens d'un élevé nombre de dents et d'un module réduit.

7. Réducteur de vitesse selon la revendication 6, **caractérisé en ce que** le rapport de conduite plus grand que 2 du premier étage (10) est réalisé au moyens d'un réduit angle de pression entre les dents et /ou d'une hauteur de la denture plutôt élevée.

8. Réducteur de vitesse selon la revendication 1, **caractérisé en ce que** le carter cylindrique (5) est directement bridé au moteur.
